# EUROPEAN PATENT APPLICATION

(11) **EP 2 315 038 A1**
(43) Date of publication of application: **27.04.2011**
(21) Application number: 09806557.6
(22) Date of filing: 04.08.2009
(51) Int. Cl.: G01P 3/487, G01D 5/245, G01P 1/02

(54) **ROTATION SENSOR**

(30) Priority: 11.08.2008 JP 2008206787; 11.08.2008 JP 2008206788; 22.08.2008 JP 2008213656
(71) Applicant: NTN Corporation, Osaka-shi, Osaka 550-0003 (JP)
(72) Inventor: NISHIKAWA, Kentarou, Iwata-shi Shizuoka 438-0037 (JP); TAKAHASHI, Toru, Iwata-shi Shizuoka 438-0037 (JP)
(74) Representative: Vieillefosse, Jean-Claude
(86) International application number: PCT/JP2009/003709
(87) International publication number: WO 2010/018661

(57) **Abstract**

A rotation sensor fixed to a sensor fixing member with simplified fixing system and excellent in water proofing property and vibration proofing property is provided. The rotation sensor includes a sensor unit having a magnetic sensor element for detecting rotation of a to-be-detected element provided in a rotating ring, a cable for drawing an output signal of the sensor element to the outside, and a substrate with an electroconductive region for electrically connecting the sensor element and a core line of the cable while the sensor element and the cable are fitted to the substrate. The substrate has at least one recess portion or projection portion engageable with a projection portion or recess portion in the sensor fixing member to fix the sensor unit to the sensor fixing member. A molding segment formed by molding is provided for covering the sensor unit.

## Description

### CROSS REFERENCE TO THE RELATED APPLICATIONS

This application is based on and claims Convention priority to Japanese patent applications No. 2008-206787 and No. 2008-206788, both filed August 11, 2008, and Japanese patent application No. 2008-213656, filed August 22, 2008, the entire disclosures of which are herein incorporated by reference as a part of this application.

### BACKGROUND OF THE INVENTION

### (Field of the Invention)

The present invention relates to a rotation sensor for use as, for example, an automobile ABS sensor.

### (Description of the Related Art)

The ABS sensor (wheel axle rotation sensor) used as fitted to a hub bearing in an automotive vehicle is rendered to be of a structure, in which a magnet or metallic body is provided in a rotating ring of the hub bearing and a magnetic sensor such as, for example, a magnetic pickup, a Hall sensor or an MR sensor is arranged in face-to-face relation with the magnet or metallic body. The ABS sensor is required to have a mechanical strength, a water proofing property, a weatherability and a chemical resistance. Because of this, sensor component parts are over-molded with resin to provide a sensor unit structure.

As a method of over-molding the sensor component parts, the Patent Document listed below, for example, suggests a method, in which while the sensor component parts are fixed beforehand to a sensor fixing holder, they are over-molded.
[Patent Document 1] JP Laid-open Patent Publication No. 2000-88984

### SUMMARY OF THE INVENTION

The sensor unit structure for the ABS sensor assembled according to the above described prior art over-molding method has the following problems:
- Since the molding material is a resin, no adherence can be expected between a built-in component such as, for example, the sensor component parts and the sensor fixing holder and the molding material.
- There is the possibility that as a result of self-heating of the sensor component parts, which are electronic parts, and/or change in ambient temperature, a gap may be formed between them due to the difference in thermal expansion between the built-in component and the molding material and, therefore, problem is found in the water proofing property.
- Even in the event of occurrence of plastic deformation in the molding material as a result of application of an external force to the sensor unit structure, a gap tends to occur between the built-in component and the molding material and, therefore, problem is similarly found in the water proofing property.
- Since the molding material in the form of the resin has a low ability to deform, there is the possibility that in the event that an external force acts on the sensor unit structure, the external force will act directly on the built-in component to such an extent as to result in fracture and/or deformation of the built-in component.
- Since the molding material in the form of the resin lacks a sufficient vibration absorbing property, problem is found in the ruggedness against external vibrations.
- There is the possibility that in the event that an external force which brings about bending of a signal cable section, which provides a signal transmitting path from the sensor unit structure to the outside, is applied, such external force is transmitted to a sensor device within the sensor unit structure, resulting in a failure.
- The conventional mold assembly formed by the injection molding requires the use of a nozzle for introducing a molten resin, one or more runner for leading the molten resin to cavity areas that define a molded product, and one or more gates communicated with the cavity areas. In order to increase the yield by allowing the molten resin, then flowing therethrough, to flow smoothly, the number of pieces manufactured at one time ranging from a few to about ten is considered proper and, thus, the number of pieces molded at one time is limited.

As a measure to resolve the problems discussed above, it may be contemplated to design the sensor unit to include a sensor element, a cable for drawing an output signal thereof to the outside and a substrate having an electroconductive region for electrically connecting an electrode portion of the sensor element and a core line of the cable together; to fix the sensor unit to a sensor fixing member through the substrate; and to provide a molding segment, formed by molding a thermoplastic elastomer or a rubber material, around the sensor unit, so that the rotation sensor having a water proofing property and a shock proofing property can be manufactured at a low cost.

However, in the above described construction, in which the sensor unit is fixed to the sensor fixing member through the substrate, if pins, for example, are employed as means for fixing the substrate to the sensor fixing member, the necessity arises to prevent those pins from falling and a substrate fixing structure tends to become complicated. Also, although it may be possible that as a different means for fixing the substrate, two holder pieces may be formed integrally with, for example, the sensor fixing member so that the substrate can be clamped from above and below by means of those holder pieces, this tends to render the positioning of the substrate to be difficult to achieve. In such case, separate structural members would be required for the positioning of the substrate and, after all, this makes the substrate fixing structure to be complicated.

In the above described construction, in which the sensor unit is covered with the molding segment molded by the use of a thermoplastic elastomer or rubber material, in the event that a portion of the molding segment separates from the sensor fixing member, a problem will arise in that that portion of the molding segment so separated will undesirably contact a movable member (such as, for example, a bearing rotating ring) of the wheel support bearing assembly to which the rotation sensor is fitted.

Also, In the above described construction, in which the sensor unit is covered with the molding segment molded by the use of a thermoplastic elastomer or rubber material, the cable tends to be pulled by the effect of an internal pressure developed during the molding of the molding segment, thus posing a problem associated with breakage of one or all electrodes of the sensor element.

An object of the present invention is intended to provide a rotation sensor of a type, in which the sensor unit can be adjustably positioned in the sensor fixing member with a simplified fixing structure, which is excellent in water proofing property and vibration proofing property, in which the molding segment for covering the sensor unit can secure a sufficient sealability of the sensor unit, and in which an undesirable separation of the cable, which would otherwise occur by the effect of a pressure developed inside a mold assembly during the molding of the molding segment for covering the sensor unit, can be effectively avoided.

In order to accomplish the foregoing object, the present invention provides a rotation sensor of a kind that can be fixed to a sensor fixing member that is adapted to be secured to a wheel support bearing assembly and is operable for detecting the rotation of a rotating ring of the wheel support bearing assembly. This rotation sensor includes a sensor unit including a magnetic sensor element for detecting a to-be-detected element provided in the rotating ring; a cable for drawing an output signal of the sensor element to the outside, and a substrate having an electroconductive region for electrically connecting an electrode of the sensor element and a core line of the cable, the sensor element and one end of the cable being fitted to the substrate; at least one of a recess portion and a projection portion, provided in the substrate, engageable with a projection portion or a recess portion defined in the sensor fixing member to fix the sensor unit to the sensor fixing member; and a molding segment for covering the sensor unit formed by molding a molding material made of a thermoplastic elastomer or rubber material.

According to the present invention, the following effects can be obtained.
- Since the sensor unit made up of the sensor component parts including the sensor element, the cable and the substrate is molded together by the molding material prepared from the thermoplastic elastomer, having an elasticity, or the rubber material, when any external force or vibration acts on the rotation sensor, the molding material absorbs such vibration or external force to minimize the influence which would acts on the sensor component parts to thereby protect the sensor component parts.
- Since the molding material is the thermoplastic elastomer having an elasticity or the rubber material, even though thermal expansion and thermal contraction, which are different in degree between the sensor component parts and the molding material occurs as a result of the self-heating of the sensor component parts, which are electronic component parts, and/or change in ambient temperature, such difference can be absorbed by the elasticity of the molding material enough to avoid an undesirable formation of a gap between the sensor component parts and the molding material to thereby secure the water proofing property.

In particular, since at least two or more recess portions provided in the substrate are engaged with the corresponding projection portions provided in the sensor fixing member to secure the substrate, which is one of the component parts of the sensor unit, to the sensor fixing member, the sensor unit can be positioned relative to and fixed to the sensor fixing member with a simplified fixing system.

In one embodiment of the present invention, a portion of the sensor fixing member that includes a mount area where the molding segment is mounted, and excludes a joint of the sensor unit, may be provided with at least one throughhole, extending from a front surface to a rear surface of the sensor fixing member.

According to this construction, particularly since the provision is made of the molding segment, formed by molding a molding material having an elasticity, while closing the sensor unit and, at the same time, a portion of the sensor fixing member, excluding a joint of the sensor unit, where the molding segment is disposed, is provided with at least one or more throughhole or throughholes so as to extend from a front surface to a rear surface of the sensor fixing member, the molding regions is linked from the front surface side to the rear surface side of the sensor fixing member through the throughhole or throughholes. As a result, even though the molding segment and the sensor fixing member are partially separated from each other, that portion of the molding segment separated from the sensor fixing member can be urged to the sensor fixing member by the effect of the compressive force developed in that portion of the molding segment filled up within the throughhole or throughholes, thereby avoiding an undesirable separation of the molding segment from the sensor fixing member. Also, since the compressive force of the molding segment as a whole becomes large, the sealability of the sensor unit can be secured sufficiently.

The at least one throughhole may be provided at a corner portion of the mount area in the sensor fixing member. If the throughhole is provided at the corner portion of the mount area of the sensor fixing member, where the molding segment is disposed, the throughhole does not overlap the joint of the sensor unit, and, therefore, a portion of the molding segment can be assuredly filled within the throughhole to secure a compressive force developed by the filled portion. Also, since the compressive force acts on the corner or corners of the site where the molding segment is disposed, the sealability of the sensor unit can further be increased.

In one embodiment of the present invention, the molding is performed by the use of a mold assembly made up of an upper mold and a lower mold and the upper and lower molds may have respective cable drawing grooves defined at sites where they confront with each other, the grooves having respective groove diameters that are smaller than an outer diameter of the cable.

According to this construction, particularly since the upper mold and the lower mold, which form respective parts of the mold assembly used to mold the molding segment, are provided with the respective cable drawing grooves at the sites where they confront with each other and the grooves have respective groove diameters that are smaller than the outer diameter of the cable, the molding of the molding segment can take place in a condition in which a portion of the cable sandwiched by the grooves in the upper and lower molds is compressed to a diameter smaller than that of any other portion of the cable and, therefore, an undesirable separation of the cable out from the mold assembly under the influence of an internal pressure developed during the molding can be avoided. Accordingly, any undesirable breakage of the electrodes of the sensor element resulting from the separation of the cable out from the mold assembly can be avoided.

In one embodiment of the present invention, prior to the molding of the molding segment, a portion of the cable, which is to be sandwiched in between the upper and lower molds, may be crimped and engaged with a ring, made of a metallic material having a good adhesion to the molding material, so as to have a diameter smaller than that of any other portion of the cable. In such case, not only can an undesirable separation of the cable during the molding of the molding segment be avoided, but also the sealability at a portion of the molding segment, from which the cable is drawn outwardly, can be increased.

Where the molding material is employed in the form of a rubber material, the molding may be carried out by the use of a mold assembly. In such case, the mold assembly is made up of an upper mold and a lower molds and the molding segment is formed by means of a compression molding that is performed by inserting the sensor unit a molding material, prepared from a rubber material, in between the upper and lower molds and applying a pressure between the upper and lower molds while the latter are heated.

When the molding of the molding segment is formed by means of the compression molding using the mold assembly as hereinabove described, a large quantity of rotation sensors can be manufactured at one cycle of molding and, therefore, the cost can be reduced. Also, if the mold assembly is employed which is made up of the upper and lower molds, a proper pressure can be applied to the molding material since positioning of the sensor unit can be easily carried out. It is to be noted that the molding by means of the injection molding requires a nozzle through which a molten resin is introduced, a runner through which the molten resin is guided into a cavity portion which defines the molded article, and an inflow port (gate) leading to the cavity portion. In order to increase the yield with the flow of the molten resin through those paths facilitated smoothly, the number of pieces to be manufactured per one cycle is appropriately considered a few to ten and the number of pieces molded per cycle is limited. In contrast thereto, the molding by means of the compression molding is effective to manufacture a large number of the rotation sensors at one molding cycle.

Where the molding material is employed in the form of a thermoplastic elastomer, the molding referred to above may be carried out by means of an injection molding with the use of a mold assembly. In such case, the injection molding may be performed by inserting the sensor unit into the mold assembly and injecting a thermoplastic elastomer into the mold assembly.

Even where the molding material is employed in the form of the rubber material, the molding may be carried out by means of the injection molding with the use of the mold assembly. In such case, the injection molding may be performed by inserting the sensor unit into the mold assembly and injecting a rubber material into the mold assembly.

Where the molding segment is formed by means of the injection molding, manufacture can be facilitated and the productivity is excellent.

Also, where the molding material is employed in the form of the rubber material, the molding may carried out with the use of a mold assembly made up of an upper mold and a lower mold and the molding segment may be formed by means of an injection molding performed by inserting a rubber material into one of the upper and lower molds and then injecting the rubber material from the other of the molds.

When as described above the molding segment is molded, not only such functional effects obtainable when the molding segment is formed by means of the injection molding solely be obtained, but also such a functional effect can be obtained that insertion of the sensor unit and the rubber material into one of the upper and lower molds beforehand is effective to facilitate positioning of the sensor unit.

The sensor element may be an element selected from the group consisting of a Hall element, a magnetoresistive effect element (MR element), a giant magnetoresistive effect element (GMR element), a tunnel magnetoresistive element (TMR element) and a coil. Whatever any of those elements is employed, a favorable rotation sensor may be obtained.

The sensor fixing member may be fitted to a stationary ring of or a member peripheral to a wheel support bearing assembly.

The sensor fixing member is fitted to the stationary ring of, or a member accessory to the wheel support bearing assembly, there is no need to use any extra member for sitting the rotation sensor and the structure can therefore be simplified.

The sensor fixing member referred to above may concurrently serves as a covering for covering one end face of a wheel support bearing assembly.

Even in this case, there is no need to use any extra member for fitting the rotation sensor and the structure can therefore be simplified.

### BRIEF DESCRIPTION OF THE DRAWINGS

In any event, the present invention will become more clearly understood from the following description of embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1A is a front elevational view of a rotation sensor according to a first embodiment of the present invention;
Fig. 1B is a cross sectional view taken along the line IB-IB in Fig. 1A;
Fig. 2 is a rear elevational view showing, on an enlarged scale, a portion II of the drawing of Fig. 1A encompassed by the phantom circle;
Fig. 3 is a sectional view, on an enlarged scale, of that portion II of the drawing of Fig. 1A encompassed by the phantom circle;
Fig. 4 is a sectional view, on an enlarged scale, of that portion II of the drawing of Fig. 1A encompassed by the phantom circle;
Fig. 5A is an explanatory diagram showing a method of molding with a molding material;
Fig. 5B is an explanatory diagram showing the method of molding with a molding material;
Fig. 6A is an explanatory diagram showing a different method of molding with the molding material;
Fig. 6B is an explanatory diagram showing the different method of molding with the molding material;
Fig. 7A is an explanatory diagram showing a still different method of molding with the molding material;
Fig. 7B is an explanatory diagram showing the still different method of molding with the molding material;
Fig. 8 is a front elevational view, on an enlarged scale, showing the rotation sensor according to a second embodiment of the present invention;
Fig. 9 is a fragmentary enlarged sectional view showing an important portion of the rotation sensor;
Fig. 10 is a front elevational view, on an enlarged scale, showing the rotation sensor according to a third embodiment of the present invention;
Fig. 11 is a fragmentary enlarged sectional view of an important portion of the rotation sensor shown in Fig. 10;
Fig. 12 is a front elevational view, on an enlarged scale, showing a portion of the rotation sensor according to a fourth embodiment of the present invention, which portion corresponds to that shown in Fig. 2;
Fig. 13 is a rear elevational view, showing that portion of the rotation sensor shown in Fig. 12;
Fig. 14 is an explanatory diagram showing a mold assembly used in molding the molding material during the manufacture of the rotation sensor according to a fifth embodiment of the present invention;
Fig. 15 is an explanatory diagram showing a modified mold assembly used in molding the molding material;
Fig. 16 is a sectional view showing a wheel support bearing assembly provided with the rotation sensor of the present invention; and
Fig. 17 is a front elevational view showing the wheel support bearing assembly as viewed from the inboard side.

### DETAILED DESCRIPTION OF THE PREFERRED EMBODIMENTS

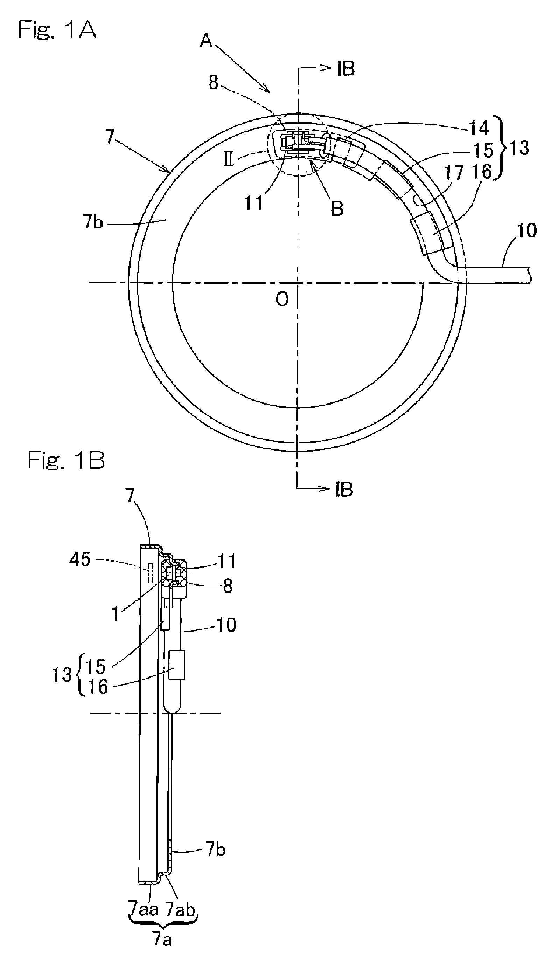

A first embodiment of the present invention will now be described in detail with particular reference to Figs. 1A and 1B to Fig. 4. The rotation sensor A shown therein includes a sensor unit B made up of a plurality of sensor component parts and fixed to a sensor fixing member 7, and a molding segment 8 for covering the sensor unit B. This rotation sensor A cooperates with and is, hence, used in combination with a to-be-detected element such as, for example, a magnetic encoder 45.

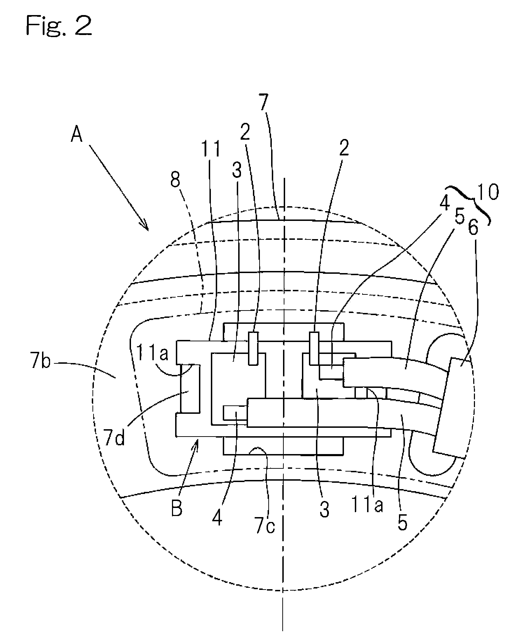

The sensor unit B is made up of a magnetic sensor element 1, a cable 10 for drawing an output signal of the sensor element 1 to the outside, and a substrate 11, to which the sensor element 1 and one end of the cable 10 are fitted. The substrate 11 is of a type having electroconductive regions 3 (best shown in Fig. 2) formed on a surface of an insulating substrate, made of, for example, resin or the like, by means of a wire printing technique. The sensor element 1 is in the form of, for example, a Hall element, a magnetoresistive effect element (MR element), a giant magnetoresistive effect element (GMR element), a tunnel magnetoresistive element (TMR element), a coil or any other type of magnetic sensor element. In the illustrated embodiment now under discussion, the cable 10 has two cable core lines 4 and 4, each being electrically insulated by means of a corresponding electrically insulative sheath 5, which is in turn covered by a cable covering 6.

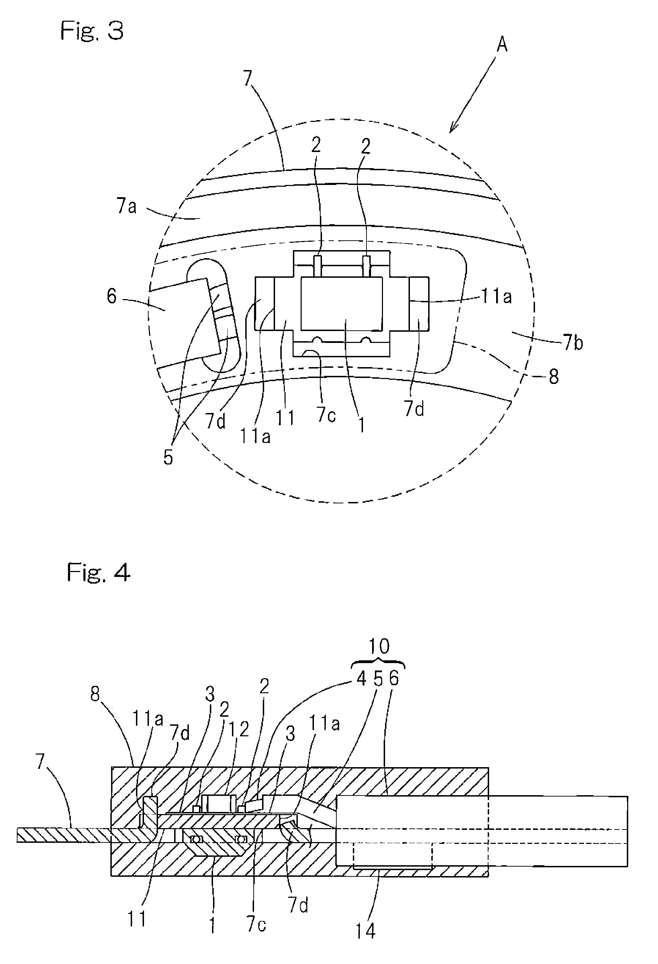

The sensor element 1 has a pair of elongated electrodes 2 and 2, which are in turn electrically connected respectively with a pair of the electroconductive regions 3 and 3 of the substrate 11. The cable core lines 4 and 4 of the cable 10 are also electrically connected with the respective electroconductive regions 3 and 3. Each of the electroconductive regions 3 is made of a metal having a high electroconductive property. In other words, the electrodes 2 of the sensor element 1 and the core lines 4 of the cable 10 are electrically connected with each other through the electroconductive regions 3 of the substrate 11, respectively. The electroconductive regions 3 are pasted to a front surface (best shown in Fig. 3) of the substrate 11 and the sensor element 1 is fitted to a rear surface (best shown in Fig. 3) of the substrate 1, with the elongated electrodes 2 of the sensor element 1 extending from the rear surface to the front surface of the substrate 11, passing through the outside of the substrate 11. Although not shown in Fig. 2, but as shown in Fig. 4, a noise killing capacitor 12 is mounted on the surface of the substrate 11 so as to straddle between the electroconductive regions 3 and 3 to be electrically connected respectively with such electroconductive regions 3 and 3. In the illustrated embodiment now under discussion, the noise killing capacitor 12 is employed in the form of a surface mounting type and, accordingly, the sensor unit B may be assembled compactly. The opposite front and rear surfaces of the substrate 11 are preferably represented by surfaces so roughened as to exhibit a high adhesion to a molding material, which eventually form the molding segment 8, the substrate 11. The electrodes 2 and the electroconductive regions 3 are electrically connected together by means of a pressure bonding, a soldering, a thermal compression bonding or any other suitable connecting technique. Similarly, the cable core lines 4 and the electroconductive regions 3 are electrically connected together by means of a pressure bonding, a soldering or any other suitable connecting technique.

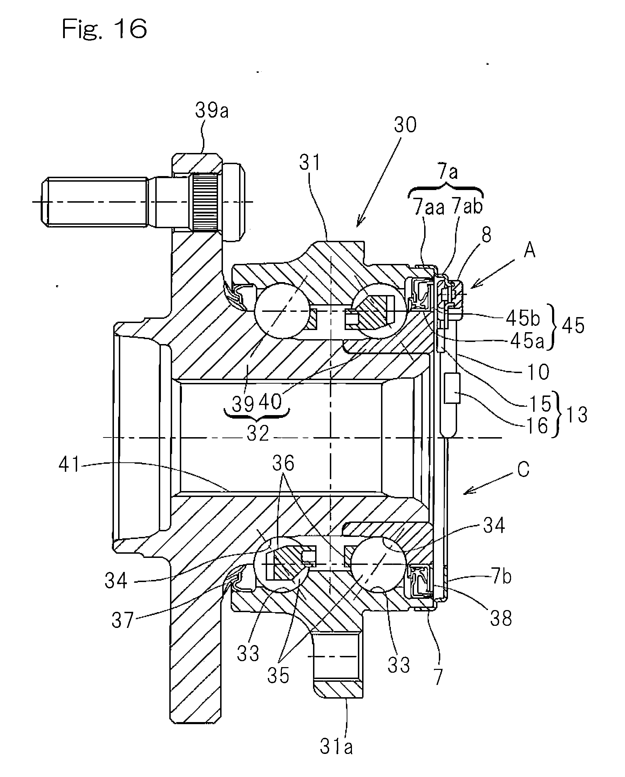

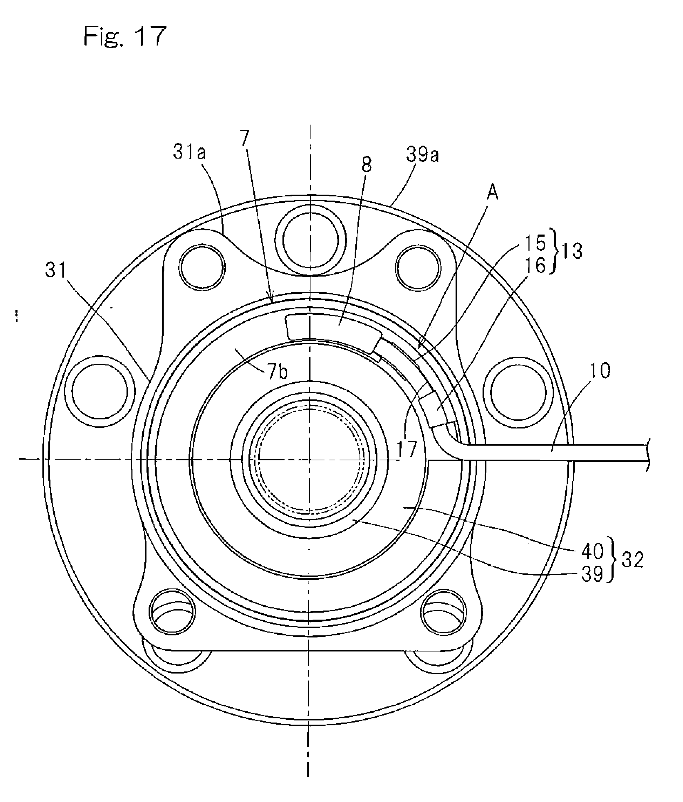

The sensor fixing member 7 referred to above concurrently serves as a covering member for covering an end face of the wheel support bearing assembly (as can readily be seen from Figs. 16 and 17) and is employed in the form of an annular metallic element having its center alignable with the longitudinal axis of the wheel support bearing assembly. This sensor fixing member 7 includes a radially stepped annular cylindrical body 7a, made up of a large diameter portion 7aa and a reduced diameter portion 7ab, and an annular flange portion 7b protruding a distance radially inwardly from an inner diametric edge of the reduced diameter portion 7ab. As best shown in Fig. 2, the substrate 11 is fixed to the annular flange portion 7b of the sensor fixing member 7 to thereby fix the sensor unit B to the sensor fixing member 7. The annular flange portion 7b has an opening 7c of defined therein, and the sensor element 1 has a portion extending through the opening 7c in the annular flange portion 7b to assume a position on one side of the substrate 11 opposite to the surface, i.e., mounting surface of the latter where the sensor element 1 is fixed.

Mounting of the substrate 11 on the sensor fixing member 7 is accomplished by aligning and engaging at least two or more recess portions 11a, defined in the substrate 11, with corresponding projection portions 7defined in the sensor fixing member 7, in a fashion with the projection portions 7d neatly and smugly received within the recess portion 11a. Specifically, the recess portions 11a in the substrate 11 are formed by cutting respective portions of the opposite ends of the rectangular substrate 11, which is oriented to a circumferential direction of the sensor fixing member 7. On the other hand, projection portions 7d in the sensor fixing member 7 are formed by cutting circumferentially oriented opposite edges of the sensor fixing member 7, which are situated adjacent the opening 7c, so as to rise in a direction towards the mounting surface of the substrate 11. Accordingly, when the substrate 11 is mounted on the sensor fixing member 7 with the recess portions 11a in the substrate 11 receiving therein the corresponding projection portions 7d in the sensor fixing member 7, the substrate 11 can be fixedly positioned to the sensor fixing member 7d by means of a simple fixing structure. In such case, since the substrate 11 is softer than the sensor fixing member 7 made of a metallic material, insertion of the substrate 11 in between the projection portions 7d in the sensor fixing member 7 allows the recess portions 11a in the substrate 11 to bite thereinto, thus ensuring a firm fixing of the substrate 11 to the sensor fixing member 7. As a result, the sensor unit B can be firmly and securely positioned relative to and fixed to the sensor fixing member 7 with a simplified fixing system. Also, mounting of the substrate 11 on the sensor fixing member 7 in the manner described above can readily be accomplished merely by pushing the substrate 11 to the sensor fixing member 7 with the recess portions 11 a receiving therein the corresponding projection portions 7d and, accordingly, the assemblage can be facilitated.

It is, however, to be noted that instead of the recess portions 11a formed in the substrate 11 and the projection portions 7d formed in the sensor fixing member 7 as shown and described hereinabove, the projection portions may be formed in the substrate 11 and the associated recess portions may be formed in the sensor fixing member 7 so that the projection portions in the substrate 11 may be engaged with the associated recess portions in the sensor fixing member 7 to thereby fix the substrate 11 to the sensor fixing member 7.

The cable 10 drawn outwardly from the molding segment 8 is placed on the annular flange portion 7b of the sensor fixing member 7 so as to extend in a direction circumferentially thereof. As best shown in Fig. 1A, a cable support 13 including a set of three, i.e., first, second and third cable support catches 14, 15 and 16 is disposed in the annular flange portion 7b of the sensor fixing member 7 and is positioned intermediate between a position of placement of the molding segment 8 in the annular flange portion 7b and a position spaced from the molding segment 8 in a direction circumferentially of the sensor fixing member 7. As shown in Figs. 1A and 1B, each of the first and second cable support catches 14 and 15 has a support face so formed as to have a generally arcuate sectional shape, opening in a direction opposite to the direction in which the radially stepped cylindrical body 7a of the sensor fixing member 7, so that it can support one of halves of a peripheral surface of a portion of the cable 10 adjacent the molding segment 8. The third cable catch 16 has a support face so formed as to have a generally arcuate sectional shape, opening in a direction opposite to the direction of opening of each of the first and second cable support catches 14 and 15, so that it can support one of halves of the peripheral surface of a portion of the cable 10 adjacent the molding segment spaced in the circumferential direction from the portions of the cable, which are supported by the first and second cable support catches 14 and 15.

In the illustrated embodiment, each of the cable support catches 14, 15 and 16 is formed integrally with the sensor fixing member 7 by means of any known press work applied to the sensor fixing member 7, which is prepared from a metallic plate. A wiring portion of the cable 10 placed on the annular flange portion 7b of the sensor fixing member 7 is formed with a respective depleted portion 17 formed by depleting a corresponding portion of the annular flange portion 7b, which lies intermediate between the neighboring cable support catches 14 and 15 or 15 and 16. Accordingly, after the substrate 11 has been fixed to the sensor fixing member 7, the cable 10 can be supported by the cable support catches 14, 15 and 16 through the cutouts 17.

A molding material used in molding the sensor unit B is chosen to be a material having rubber elasticity and may be suitably employed in the form of a rubber material or a thermoplastic elastomer. For the rubber material, one of nitrile rubber and fluorinated rubber may be desirably employed. Those material are excellent in heat resistance, low temperature characteristic and oil resistance. However, any of known rubber material other than those mentioned above may be employed. For the thermoplastic elastomer, a polyvinyl chloride, an ester or an amide is desirable. Those resins are excellent in heat resistance and oil resistance.

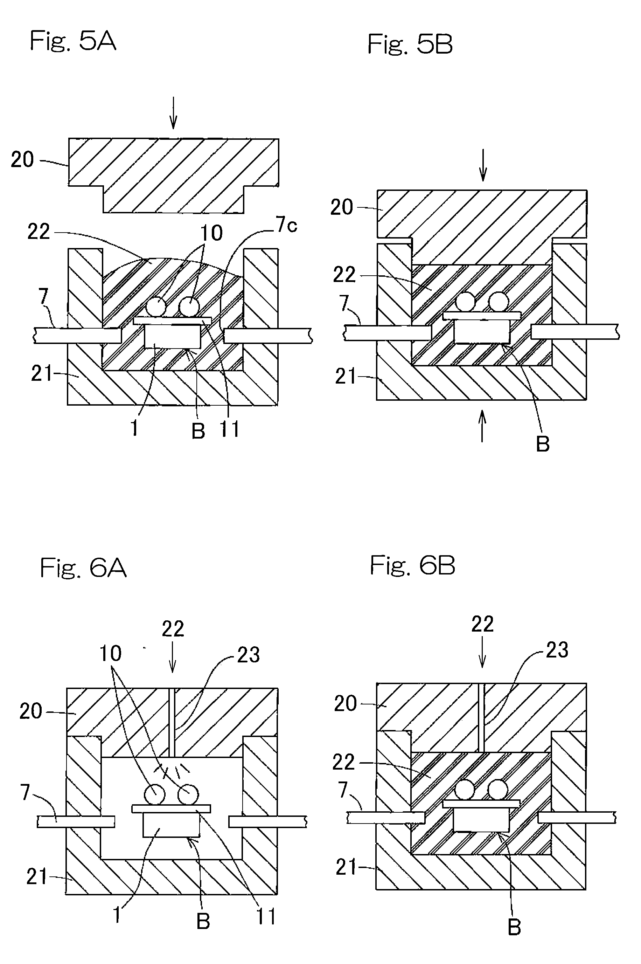

Where the molding material is employed in the form of the rubber material, molding of the molding material may be performed by means of a compression molding with the use of a mold assembly. The compression molding using the mold assembly is carried out by inserting the sensor unit B, the sensor fixing member 7 and the molding material 22 in between upper and lower molds 20 and 21 forming the mold assembly as shown in Fig. 5A and then applying a pressure between the upper and lower molds 20 and 21 while the latter are heated as shown in Fig. 5B. Since the substrate 11 is fixed to the sensor fixing member 7, displacement of the sensor unit B under the influence of an internal pressure inside the mold assembly 20 and 21 may be prevented during the compression molding taking place, and, therefore, the sensor unit B may be easily positioned within the mold assembly. Moreover, when the mold assembly is made up of the upper and lower molds 20 and 21 as shown and described above, positioning of the sensor unit B can be facilitated and an appropriate pressure can be applied to the molding material. In addition, by forming the molding segment 8 by means of the compression molding technique with the use of the mold assembly, a substantial number of rotation sensors A can be manufactured in one molding cycle and, therefore, the cost of manufacture can be reduced.

If the molding material is employed in the form of the thermoplastic elastomer, molding of the molding material is preferably carried out by means of an injection molding with the use of a mold assembly. The injection molding with the use of the mold assembly is carried out by, for example, inserting the sensor unit B and the sensor fixing member 7 (not shown) into separable molds 20 and 21 of the mold assembly as shown in Fig. 6A and then injecting the molding material 22 into the mold assembly 20 and 21 through a molding material injecting port 23 defined in the mold 20 to form the molding material 22 as shown in Fig. 6B. In the embodiment shown in Fig. 6A, the sensor unit B is fixed at a predetermined position by the sensor fixing member 7 (not shown). Even where the molding material is employed in the form of the rubber material, the molding can be accomplished in a manner similar to that described above. The molding by means of the injection molding is effective to facilitate the manufacture and results in an excellent productivity.

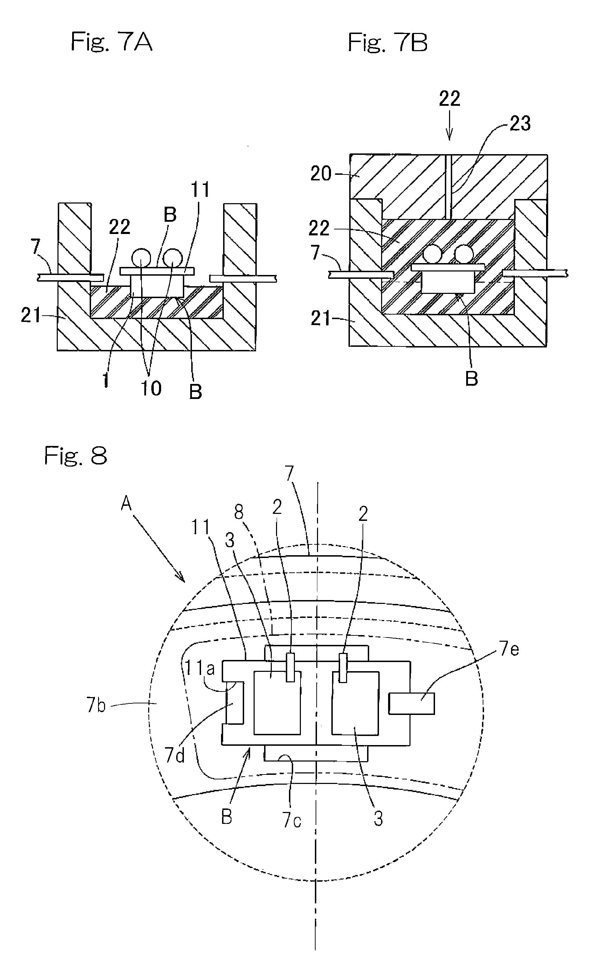

Also, where the molding material is employed in the form of the rubber material, the molding material may be molded according to a method shown in Figs. 7A and 7B and as described below. Specifically, the injection molding makes use of a mold assembly comprised of upper and lower molds 20 and 21 and is carried by inserting the sensor unit B, the sensor fixing member 7 (not shown) and the molding material 22 into one of the upper and lower molds (for example, the lower mold 21 as shown in Fig. 7A) and then injecting the molding material 22 into the mold assembly 20 and 21 through a molding material injecting port 23 defined in the other of the upper and lower molds (the upper mold 20 in the example shown in Fig. 7B. When the molding segment 8 is molded in this manner, in addition to effects that are obtained when the molding is carried solely by means of the previously described injection molding technique, an additional effect can be obtained, in which placement of the sensor unit B and the molding material 22 in the lower mold 21 prior to the injection of the molding material through the injecting port 23 in the upper mold 20 can facilitate positioning of the sensor unit B.

In the rotation sensor A of the structure hereinabove described, since the sensor unit B is molded by the molding material 22 in the form of the rubber material or the thermoplastic elastomer having the elasticity, the molding segment 8 so formed can absorb a vibration or an external force, when such vibration or external force acts on the rotation sensor A, to thereby minimize any adverse influence which would be brought on the sensor component parts of the sensor unit B, thus protecting those sensor component parts. Also, since the molding segment 8 is formed by the rubber material or the thermoplastic elastomer having the elasticity, even when different thermal expansion and contraction of a varying degree take place between the sensor component parts and the molding segment 8, as a result of change in ambient temperature and/or self-heating of the sensor component parts which are electronic component parts, the difference in thermal expansion and contraction can be absorbed by the elastic material of the molding segment 8 and, therefore, an undesirable formation of any gap between the sensor component parts and the molding region 8 can be prevented, allowing the water proofing property to be preserved.

In particular, since the substrate 11, which is one of the component parts of the sensor unit B, is fixed to the sensor fixing member 7 while the recess portions 11 a provided in the substrate 11 at two or more locations have been engaged with the projection portions 7d provided in the sensor fixing member 7 as hereinabove described, the sensor unit B can be positioned relative to and fixed to the sensor fixing member 7 with a simplified fixing system.

Also, in the foregoing embodiment, an undesirable slackening of the cable 10 can be avoided without the cable 10 being crimped, because the cable support 13, which includes the first and second cable support catches 14 and 15, each having the arcuately sectioned support face for supporting one of halves of the peripheral surface of that portion of the cable 10, and the third cable support catch 16 having the arcuately sectioned support face for supporting the other of the halves of the peripheral surface of the cable 10 on one side opposite to such one of the halves of the peripheral surface, is provided at the position spaced from the molding segment 8 in the sensor fixing member 7. In addition, since when a load is applied from the outside, such load can be borne by the cable support catches 14, 15 and 16, transmission of the load to the molding segment 8 and the electrodes 2 and 2 of the sensor element 1 can be avoided. As a result, it is possible to avoid an undesirable breakage of the molding segment 8, which would otherwise result from fluctuation of the cable 10 and, hence, it is possible to secure the reliability of the rotation sensor.

Yet, in the foregoing embodiment, since the sensor fixing member 7 concurrently serves as a covering for the wheel support bearing assembly, positioning of the rotation sensor A can be facilitated and the number of the component parts used can be minimized. Considering that the sensor fixing member 7 is made of a metallic material, a good adhesion can be exhibited between the sensor fixing member 7 and the molding segment 8 particularly where the molding material is employed in the form of the rubber material, allowing the rotation sensor A as a whole to have a robust structure.

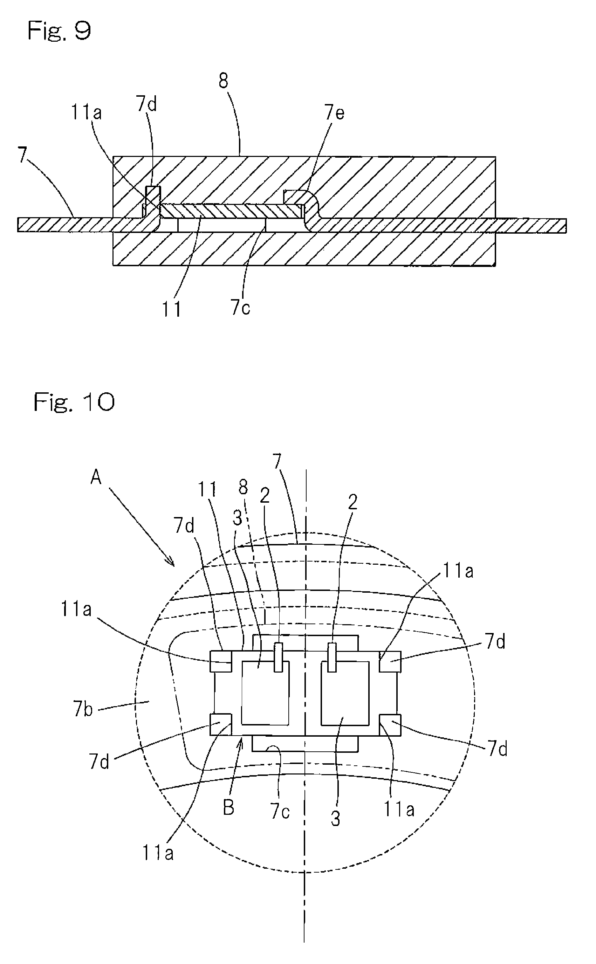

Figs. 8 and 9 illustrate the rotation sensor according to a second embodiment of the preset invention. The rotation sensor A according to this embodiment is substantially similar to that according to the first embodiment shown and described with particular reference to Figs. 1A and 1B to Fig. 4, but differs therefrom in that in order to fix the substrate 11 to the sensor fixing member 7, not only is one recess portion 11a defined in the substrate 11 and engaged with a corresponding projection portion 7d which is defined in the sensor fixing member 7, but also a portion of the substrate 11 opposite to the recess portion 11a is sandwiched by a holder 7e, provided at another portion of the sensor fixing member 7 opposite to the projection portion 7d. Specifically, in a manner similar to formation of one of the recess portions 11a in the substrate 11 and one of the projection portions 7d in the sensor fixing member 7 in the first embodiment of the present invention shown and described with particular reference to Figs. 1A and 1B to Fig. 4, the recess portion 11a in the substrate 11 is formed by cutting a portion of one end of the sensor fixing member 7, which is oriented in the circumferential direction of the latter, in a direction inwardly thereof and the associated projection portion 7d in the sensor fixing member 7 is formed by cutting a circumferentially oriented edge of the sensor fixing member 7, which is situated adjacent the opening 7c, so as to rise in a direction towards the mounting surface of the substrate 11. The holder 7e in the sensor fixing member 7 is formed by cutting that circumferentially oriented edge of the sensor fixing member 7, which is situated adjacent the opening 7c, so as to rise in a direction towards the mounting surface of the substrate 11 so that an surface of the substrate 11 remote from the recess portion 11a can be immovably retained under the holder 7e. Other structural features of the rotation sensor according to the second embodiment of the present invention are substantially similar to those shown and described in connection with the previously described first embodiment with reference to Figs. 1A and 1B to Fig. 4. It is, however, to be noted that in Fig. 8 showing the front surface side of the sensor unit B, that portion of the cable 10 connected with the electroconductive region 3 of the substrate 11 is not shown for the sake of clarity and that the sensor element 1, the electroconductive region 3 and the cable 10 are now shown in Fig. 9 for the sake of clarity.

According to the second embodiment described above, that end portion of the substrate 11 is retained immovably by the holder 7e formed in the sensor fixing member 7, the substrate 11 can be positioned relative to and fixed to the sensor fixing member 7 because the opposite end portion of the substrate 11 has the recess portion 11a snugly and neatly receiving therein the projection portion 7d formed in the sensor fixing member 7. Accordingly, the sensor unit B can be positioned relative to and fixed to the sensor fixing member 7 with a simplified fixing system.

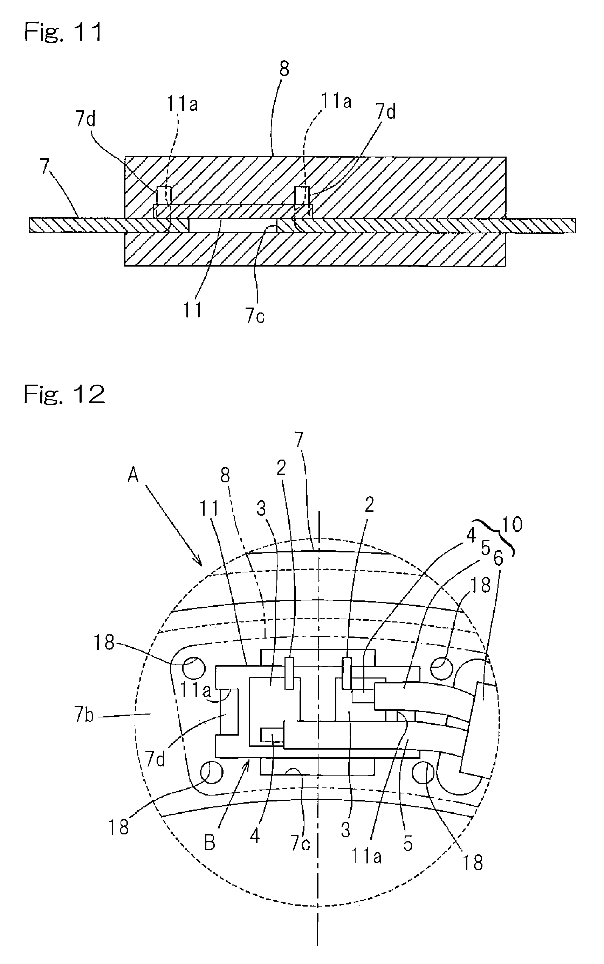

Figs. 10 and 11 illustrate the rotation sensor according to a third embodiment of the present invention. The rotation sensor A shown therein is substantially similar to that according to the first embodiment shown and described with particular reference to Figs. 1A and 1B to Fig. 4, but differs therefrom in that in order to fix the substrate 11 to the sensor fixing member 7, the substrate 11 has four corner areas of its rectangular shape depleted to define four recess portions 11a for receiving therein corresponding four projection portions 7d which are formed by cutting and bending four circumferentially oriented opposite edge portions of the sensor fixing member 7 situated adjacent the opening 7c so as to rise. Other structural features of the rotation sensor according to the second embodiment of the present invention are substantially similar to those shown and described in connection with the previously described first embodiment with reference to Figs. 1A and 1B to Fig. 4. It is, however, to be noted that in Fig. 10 showing the front surface side of the sensor unit B, that portion of the cable 10 connected with the electroconductive region 3 of the substrate 11 is not shown for the sake of clarity and, similarly, the sensor element 1, the electroconductive region 3 and the cable 10 are now shown in Fig. 11 which shows the sectional view of the sensor unit B of Fig. 10.

According to the third embodiment, since the substrate 11 is fixed to the sensor fixing member 7 with the four corner areas thereof formed with the projection portions 11a which cooperate with the respective projection portions 7d in the substrate 7 to arrest the latter immovably in position, the substrate 11 can be further assuredly positioned relative to and fixed to the sensor fixing member 7. Accordingly, the sensor unit B can be further assuredly positioned relative to and fixed to the sensor fixing member 7 with a simplified fixing system.

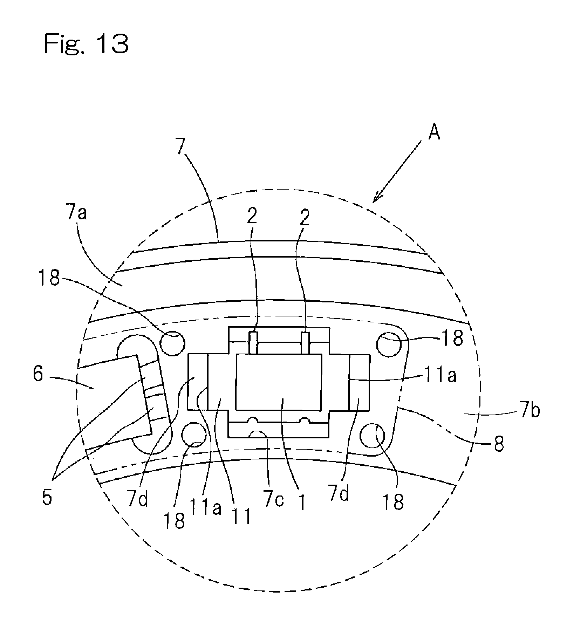

The rotation sensor according to a fourth embodiment will now be described with particular reference to Figs. 12 and 13. It is to be noted that Figs. 12 and 13 correspond respectively to Figs. 2 and 3, which show the first embodiment. In those figures, component parts shown by the reference numerals in Figs. 12 and 13 are designated by like reference numerals employed in Figs. 1A and 1B to Fig. 4, and the description will be made focusing on important elements except for those which has been described above.

In the case of the rotation sensor according to the fourth embodiment, in a mount area of the molding segment 8, where the molding segment 8 is mounted, excluding a portion where the sensor unit B is fixed to the sensor fixing member 7, at least one throughhole 18 is defined, which extends completely across the sensor fixing member 7 from the front surface to the rear surface thereof. It is, however, to be noted that in the embodiment shown in Figs. 12 and 13, four throughholes 18 are employed and positioned at four corners of the mount area of the molding segment 8 in the sensor fixing member 7. Accordingly, the molding segment 8 covering the sensor unit B can be linked from the front surface side to the rear surface side of the sensor fixing member 7 through the four throughholes 18.

Specifically, the molding segment 8 covering the sensor unit B is linked from the surface side to the rear side of the sensor fixing member 7 through the throughholes 18 defined in the sensor fixing member 7 and, yet, the molding material used to form the molding segment 8 has elasticity. Accordingly, even when the molding segment 8 and the sensor fixing member 7 are separated from each other at one locality therebetween, a portion of the molding segment at that locality will be urged to the sensor fixing member 7 by the action of a compressive force developed in another portion or portions of the molding segment 8 filled within the throughhole or throughholes 18, thereby preventing the molding segment 8 from being undesirably separated from the sensor fixing member 7. Also, since the compressive force of the molding segment 8 as a whole becomes large, the sealability of the sensor unit B can be secured sufficiently.

According to the fourth embodiment as hereinabove described, the throughholes 18 are provided at the four corner areas of the four corners of the mount area of the molding segment 8 in the sensor fixing member 7 and, therefore, the throughholes 18 does not overlap the joint of the sensor unit B and those portions of the molding segment 8 are assuredly filled in the throughholes so that the compressive force thereof may act on the corners of the mount area of the molding segment 8 to enhance the sealability of the sensor unit B.

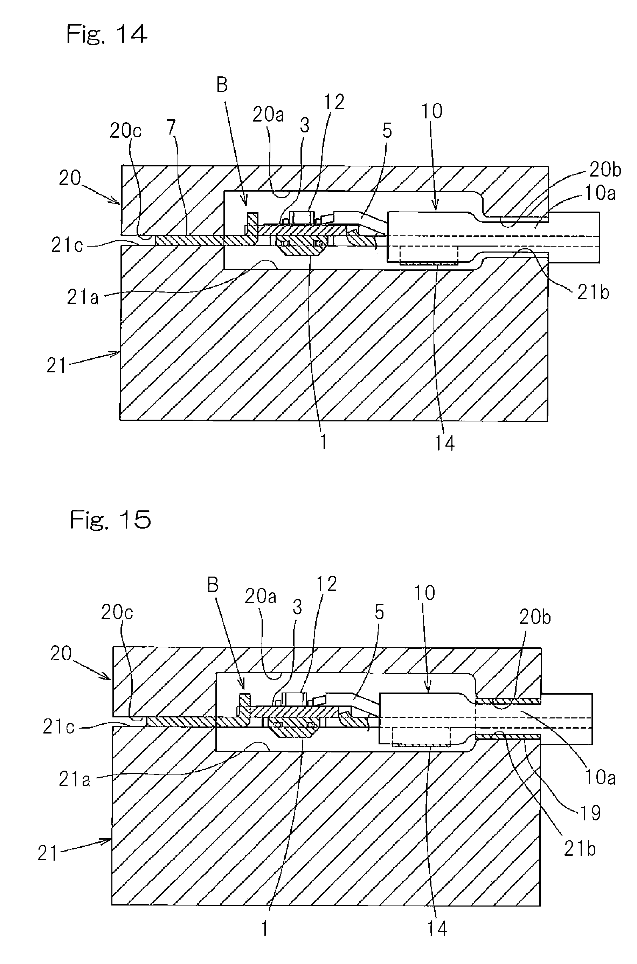

The rotation sensor according to a fifth embodiment of the present invention will be described in detail with particular reference to Figs. 14 and 15. It is, however, to be noted Figs. 1A and 1B to Fig. 4, all showing the first embodiment as hereinbefore described, can directly apply to the fifth embodiment and, therefore, the details thereof are not reiterated for the sake of brevity.

According to the fifth embodiment, the molding segment 8 is formed by molding the molding material with the use of a mold assembly made up of upper and lower molds 20 and 21. As best shown in Fig. 14, the upper and lower molds 20 and 21 have their respective rear faces confronting with each other, which rear faces are formed with associated recess portions or cavity halves 20a and 21a defined therein. Those cavity haves 20a and 21 a, when the upper and lower molds 20 and 21 are mated together, define a mold cavity of a shape duplicating the shape of the molding segment 8. Also, respective portions of the rear faces of the upper and lower molds 20 and 21 have peripheral edges defining the respective cavity halves 20a and 21 a, and portions of those peripheral edges surrounding respective openings of the cavity haves 20a and 21a, which are opposite to each other, are formed with semicircular sectioned grooves 20b and 21b to define a passage through which the cable 10 can be drawn outwardly of the mold assembly. The passage, defined by the cable drawing grooves 21 a and 21b when the upper and lower molds 20 and 21 are mated together, has a diameter smaller than the outer diameter of the cable 10. At respective positions of the peripheral edges of the respective openings defining the cavity halves 20a and 21a in the rear faces of the upper and lower molds 20 and 21, excluding the semicircular sectioned cable drawing grooves 20b and 21b, clamp grooves 20c and 21 c are formed, and those grooves 20c and 21 c, when the upper and lower molds 20 and 21 are mated together, cooperate with each other to sandwich the sensor fixing member 7 from opposite surfaces thereof.

The above described fifth embodiment makes use of the mold assembly of the structure described above and, accordingly, during the molding being effected with the upper and lower molds 20 and 21 mated together, a cable portion 10a of the cable 10 that is drawn outwardly from the mold assembly is compressed generally radially inwardly because of being sandwiched in between the cable drawing grooves 20b and 21b of the upper and lower molds 20 and 21, thereby presenting an outer diameter smaller than the initial outer diameter assumed thereby when that cable portion 10a in a free standing stage. Accordingly, during the formation of the molding segment 8, the cable 10 can be prevented from being pulled in a direction, in which it may be separated outwardly, by the effect of an internal pressure developed inside the mold assembly and, hence, any undesirable breakage of the electrodes 2 of the sensor element 1, which would otherwise occur when pulled outwardly in the manner described above, can also be avoided.

In addition, that portion 10a of the cable 10, which is sandwiched between the respective cable drawing grooves 20b and 21b of the upper and lower molds 20 and 21, may be crimped and engaged with a ring 19, prior to the molding, as shown in Fig. 15. In such case, the ring 19 is preferably made of a material having a good adhesion to the molding material, and is so designed to have an outer diameter smaller than that of any other portion of the cable 10.

As hereinabove described, where that portion 10a of the cable 10, sandwiched between the cable drawing grooves 20b and 21b of the upper and lower molds 20 and 21 when the latter are mated together, is crimped and engaged with the ring 19, the sealability of that portion of the cable 10, which is drawn outwardly from the molding segment 8 at the time the molding segment 8 is being formed, can be increased under the presence of the ring 19. The advantage where the possibility of the cable 10 being pulled in a direction, in which the cable 10 is separated outwardly, by the effect of the internal pressure developed inside the mold assembly during the molding of the molding segment 8, can be avoided is similar to that afforded in the fifth embodiment shown in and described with particular reference to Fig. 14.

Figs. 16 and 17 illustrate a wheel support bearing assembly provided with the rotation sensor of the present invention. The illustrated wheel support bearing assembly includes, as best shown in the sectional representation in Fig. 16, a bearing unit 30 having a rotation sensor-mounted fixing member fitting component C, with the rotation sensor A fixed thereto, which component is fitted to the sensor fixing member 7. It is to be noted that in the description that follows, one side of a vehicle body structure laterally away from the longitudinal center thereof in a condition, in which the bearing assembly is mounted on the vehicle body structure, is referred to as "outboard" whereas the opposite side of the vehicle body structure laterally close towards the longitudinal center thereof in the same condition is referred to as "inboard".

The bearing unit 30 includes an outer member 31 having an inner periphery formed with a plurality of raceways 33, an inner member 32 having raceways 34 defined therein in face-to-face relation with the raceways 33, and a plurality of rows of rolling elements 35 interposed between the raceways 33 in the outer member 31 and the mating raceways 34 in the inner member 32. The rolling elements 35 of each row are retained by a respective retainer 36. Opposite ends of a bearing space delimited between the outer and inner members 31 and 32 are sealed by respective sealing units 37 and 38.

The outer member 31 serves as a stationary ring and is of one piece construction having its outer periphery provided with a radially outwardly extending flange 31a for rigid connection with a knuckle (not shown) that extends from an automobile suspension system mounted on a vehicle body structure. On the other hand, the inner member 32 serves as a rotating ring and is made up of a hub axle 39 having a wheel mounting flange 39a on the outboard side and an inner ring segment 40 mounted on an outer periphery of the hub axle 39 at an inboard end portion thereof. The raceways 34 referred to above are formed in the hub axle 39 and the inner ring segment 40. The inner member 32 has a center through-bore 41 defined therein in alignment with the longitudinal axis thereof so as to extend axially thereof, and a stem portion (not shown) of one of coupling members of a constant velocity joint is inserted into this center through-bore of the inner member 32 for rotation together therewith.

Of the sealing units 37 and 38 referred to above, the sealing unit 38 on the inboard side has a magnetic encoder 45 incorporated therein as a to-be-detected element. This magnetic encoder 45 includes a generally L-sectioned annular ring member 45a, having a radially extending cylindrical wall portion, which is to be mounted on the inner member 2 under interference fit, and a upright wall portion extending radially outwardly from an inboard end of the cylindrical wall portion, and a multipolar magnet 45b fixedly mounted on the upright wall portion of the ring member 45a. The multipolar magnet 45b is in the form of a ring shaped member having a plurality of magnetic poles N and S deployed in a direction circumferentially thereof so as to alternate with each other and may be employed in the form of a rubber magnet, plastic magnet or sintered magnet. In the illustrated embodiment shown in Figs. 16 and 17, the magnetic encoder 45 concurrently serves as a component part of the inboard side sealing unit 38 and functions as a slinger.

The sensor fixing member 7 hereinbefore discussed in detail in connection with the rotation sensor is fitted to the outer member 31 with the large diameter cylindrical portion 7aa mounted on an inboard end portion of the outer periphery of the outer member 31 and also with a stepped face between the large diameter portion 7aa and the reduced diameter portion 7ab held in abutment with an inboard end face of the outer member 31. This sensor fixing member 7 concurrently serves as the covering member for covering an inboard side end face of the wheel support bearing assembly unit and, in a condition in which the sensor fixing member 7 is fitted to the outer member 31 in the manner described above, the rotation sensor A is held in position facing the magnetic encoder 45. It will readily be understood that when the inner member 32 serving as the rotating ring rotates, the sensor element 1 detects the alternating magnetic poles N and S of the magnetic encoder 45 rotating together with the inner member 32. A detection signal outputted from the sensor element 1 is supplied through the cable 10 to an automobile electric control unit (not shown), which in turn calculates the number of revolutions in reference to the detection signal fed from the sensor element 1.

The rotation sensor A employed in the wheel support bearing assembly in the manner described hereinabove is of a type that is oriented axially relative to the magnetic encoder 45, but the present invention equally applies even where the rotation sensor A is of a type that is oriented radially relative to the magnetic encoder 45.

Also, for the to-be-detected element referred to previously, whichever the magnetic encoder 45 or the pulse coder may be fitted to an automobile wheel.

In addition, although in the wheel support bearing assembly shown in and described with reference to Figs. 16 and 17, the sensor fixing member 7 has been fitted directly to the stationary ring, the sensor fixing member 7 may be fitted to the stationary ring through an extra peripheral member thereof.

Although the various embodiments of the present invention have been described, the type, which makes use of the throughhole 18 without any recess portion 11a and any projection portion 7d can be embodied in any one of the following modes 1 to 9:

### [Mode 1]

The rotation sensor according to the Mode 1 is a rotation sensor fixed to the sensor fixing member, which is adapted to be fitted to the wheel support bearing assembly, for detecting rotation of the rotating ring of the wheel support bearing assembly unit and includes a sensor unit, made up of a magnetic sensor element for detecting a to-be-detected provided in the rotating ring, a cable for drawing an output signal of the sensor element to the outside, and a substrate having the sensor element and one end of the cable being fitted to the substrate and also having an electroconductive region for electrically connecting an electrode of the sensor element and a core line of the cable, in which the sensor unit is fixed to the sensor fixing member and a molding segment is formed by molding a molding material consisting of a thermoplastic elastomer or rubber material in a manner covering the sensor unit and in which at least one or more throughhole is provided in a portion of the sensor fixing member, where the molding segment is disposed, excluding the joint of the sensor unit, so as to extend from a front surface to a rear surface of the sensor fixing member.

The construction according to this mode brings about the following functional effects.
- Since the sensor unit made up of the sensor component parts including the sensor element, the cable and the substrate is molded together by the molding material prepared from the thermoplastic elastomer, having an elasticity, or the rubber material, when any external force or vibration acts on the rotation sensor, the molding material absorbs such vibration or external force to minimize the influence which would acts on the sensor component parts to thereby protect the sensor component parts.
- Since the molding material is the thermoplastic elastomer having an elasticity or the rubber material, even though thermal expansion and thermal contraction, which are different in degree between the sensor component parts and the molding material occurs as a result of the self-heating of the sensor component parts, which are electronic component parts, and/or change in ambient temperature, such difference can be absorbed by the elasticity of the molding material enough to avoid an undesirable formation of a gap between the sensor component parts and the molding material to thereby secure the water proofing property.

In particular, since the provision has been made of the molding segment formed by molding the molding material, having an elasticity, in a fashion covering the sensor unit and, also, at least one or more throughholes are provided in that portion of the molding segment, excluding the joint of the sensor unit in the sensor fixing member, which extends from the front surface to the rear surface of the sensor fixing member, the molding segment can be linked from the front surface side to the rear surface side of the sensor fixing member through such throughhole or throughholes. As a result, even though the molding segment and the sensor fixing member are partially separated from each other, that portion of the molding segment separated from the sensor fixing member can be urged to the sensor fixing member by the effect of the compressive force developed in that portion of the molding segment filled up within the throughhole or throughholes, thereby avoiding an undesirable separation of the molding segment from the sensor fixing member. Also, since the compressive force of the molding segment as a whole becomes large, the sealability of the sensor unit can be secured sufficiently.

### [Mode 2]

In the Mode 1 described above, the throughhole or throughholes may be provided in one or plural corners of the site where the molding segment is disposed in the sensor fixing member.

### [Mode 3]

In the Mode 1 described above, the molding is carried out by the use of an upper mold and a lower mold and the mold assembly is made up of the upper and lower molds and the molding segment is formed by means of a compression molding technique by inserting the sensor unit and the molding material in the form of the rubber material in between the upper and lower molds and then applying a pressure to the upper and lower molds while the latter are heated.

### [Mode 4]

In the Mode 1 described above, the molding is performed by means of an injection molding using a mold assembly and the molding segment is injection molded by inserting the sensor unit within the mold assembly and then injecting the thermoplastic elastomer into the mold assembly.

### [Mode 5]

In the Mode 1 described above, the molding is an injection molding with the use of a mold assembly and is performed by inserting the sensor unit into the mold assembly and then injecting the rubber material into the mold assembly to form the molding segment.

### [Mode 6]

In the Mode 1 described above, the molding is performed by the use of a mold assembly made up of an upper mold and a lower mold and is performed by inserting the rubber material into one of the upper and lower molds and then injecting the rubber material from the other of the mold assembly.

### [Mode 7]

In the Mode 1 described above, the sensor element is in the form of a Hall element, a magnetoresistive element, a giant magnetoresistive element, a tunnel magnetoresistive element or a coil.

### [Mode 8]

In the Mode 1 described above, the sensor fixing member is fitted to a stationary ring or a member peripheral thereto of the wheel support bearing assembly unit.

### [Mode 9]

In the Mode 1 described above, the sensor fixing member concurrently serves as a covering for covering an end face of the wheel support bearing assembly unit.

Moreover, the type, in which the mold assembly, made up of an upper mold and a lower mold for molding the molding segment without any recess portion 11a and any projection portion 7d, has the cable drawing grooves 20b and 21b can be embodied in any one of the following modes 10 to 18:

### [Mode 10]

The rotation sensor according to the Mode 10 is a rotation sensor fixed to the sensor fixing member, which is adapted to be fitted to the wheel support bearing assembly, for detecting rotation of the rotating ring of the wheel support bearing assembly unit and includes a sensor unit, made up of a magnetic sensor element for detecting a to-be-detected provided in the rotating ring, a cable for drawing an output signal of the sensor element to the outside, and a substrate having the sensor element and one end of the cable being fitted to the substrate and also having an electroconductive region for electrically connecting an electrode of the sensor element and a core line of the cable, in which the sensor unit is fixed to the sensor fixing member and a molding segment is formed by molding a molding material consisting of a thermoplastic elastomer or rubber material in a manner covering the sensor unit and in which the molding is performed with the use of an upper and lower molds which have respective cable drawing grooves defined therein at area of the upper and lower molds where the latter are mated together, those grooves having groove diameters smaller than an outer diameter of the cable.

The construction according to this mode brings about the following functional effects.
- Since the sensor unit made up of the sensor component parts including the sensor element, the cable and the substrate is molded together by the molding material prepared from the thermoplastic elastomer, having an elasticity, or the rubber material, when any external force or vibration acts on the rotation sensor, the molding material absorbs such vibration or external force to minimize the influence which would acts on the sensor component parts to thereby protect the sensor component parts.
- Since the molding material is the thermoplastic elastomer having an elasticity or the rubber material, even though thermal expansion and thermal contraction, which are different in degree between the sensor component parts and the molding material occurs as a result of the self-heating of the sensor component parts, which are electronic component parts, and/or change in ambient temperature, such difference can be absorbed by the elasticity of the molding material enough to avoid an undesirable formation of a gap between the sensor component parts and the molding material to thereby secure the water proofing property.

In particular, since the upper and lower molds forming respective parts of the mold assembly for molding the molding segment has the cable drawing grooves formed at that sites of the upper and lower molds, where they confront with each other, and those groove diameters have a diameter smaller than the outer diameter of the cable, the molding segment can be molder in a manner in which that portion of the cable, which is sandwiched in between the grooves in the upper and lower molds, is compressed to a diameter smaller than that of any other portion of the cable and, therefore, it is possible to avoid separation of the cable out from the mold assembly which would otherwise take place by the effect of the internal pressure during the molding. Accordingly, an undesirable breakage of the electrodes of the sensor element, which would otherwise result from the separation of the cable out from the mold assembly, can be advantageously avoided.

### [Mode 11]

In the Mode 10 described above, that portion of the cable, which are sandwiched in between the grooves in the upper and lower molds, when the latter are mated together, is crimped and engaged by a ring made of a metallic material having a good adhesion to the molding material and is rendered to have a diameter smaller than that of any other portion of the cable.

### [Mode 12]

In the Mode 10 described above, the molding segment is formed by means of an injection molding that is performed by inserting the sensor unit and the rubber material in between the upper and lower molds and then applying a pressure between the upper and lower molds while the latter are heated.

### [Mode 13]

In the Mode 10, the molding segment is formed by means of an injection molding which is performed by inserting the sensor unit into the mold assembly and then injecting the thermoplastic elastomer into the mold assembly.

### [Mode 14]

In the Mode 10 described above, the molding segment is formed by means of an injection molding which is performed by inserting the sensor unit into the mold assembly and then injecting the rubber material into the mold assembly.

### [Mode 15]

In the Mode 10 described above, the molding segment is formed by means of an injection molding which is performed by inserting the rubber material into one of the upper and lower molds and then injecting the rubber material from the other thereof.

### [Mode 16]

In the Mode 10 described above, the sensor element is in the form of a Hall element, a magnetoresistive element, a giant magnetoresistive element, a tunnel magnetoresistive element or a coil.

### [Mode 17]

In the Mode 10 described above, the sensor fixing member is fitted to a stationary ring or a member peripheral thereto of the wheel support bearing assembly unit.

### [Mode 18]

In the Mode 10 described above, the sensor fixing member concurrently serves as a covering for covering an end face of the wheel support bearing assembly unit.

Although the present invention has been fully described in connection with the embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1:: Sensor element
- 2:: Electrode
- 3:: Electroconductive region
- 4:: Cable core line
- 7:: Sensor fixing member
- 7d:: Protection portion
- 8:: Molding segment
- 10:: Cable
- 11:: Substrate
- 11a:: Recess portion
- 18:: Throughhole
- 20:: Upper mold (Mold assembly)
- 21:: Lower mold (Mold assembly)
- 20b, 21b:: Groove
- 22:: Molding material
- 45:: Magnetic encoder (To-be-detected element)
- A:: Rotation sensor
- B:: Sensor unit

## Claims

1. A rotation sensor fixed to a sensor fixing member to be fitted to a wheel support bearing assembly, for detecting the rotation of a rotating ring of the wheel support bearing assembly, which sensor comprises:
a sensor unit including a magnetic sensor element for detecting a to-be-detected element provided in the rotating ring; a cable for drawing an output signal of the sensor element to the outside, and a substrate having an electroconductive region for electrically connecting an electrode of the sensor element and a core line of the cable, the sensor element and one end of the cable being fitted to the substrate;
at least one of a recess portion and a projection portion, provided in the substrate, engageable with a projection portion or a recess portion defined in the sensor fixing member to fix the sensor unit to the sensor fixing member; and
a molding segment for covering the sensor unit formed by molding a molding material made of a thermoplastic elastomer or rubber material.

2. The rotation sensor as claimed in claim 1, wherein a portion of the sensor fixing member that includes a mount area where the molding segment is mounted, and excludes a joint of the sensor unit, is provided with at least one throughhole, extending from a front surface to a rear surface of the sensor fixing member.

3. The rotation sensor as claimed in claim 2, wherein the at least one throughhole is provided at a corner portion of the mount area in the sensor fixing member.

4. The rotation sensor as claimed in claim 1, wherein the molding is performed by the use of a mold assembly made up of an upper mold and a lower mold and the upper and lower molds have respective cable drawing grooves defined at sites confronting each other, the grooves having respective groove diameters that are smaller than an outer diameter of the cable.

5. The rotation sensor as claimed in claim 4, wherein a portion of the cable, which is to be sandwiched in between the upper and lower molds, is crimped and engaged with a ring, made of a metallic material having a good adhesion to the molding material, so as to have a diameter smaller than that of any other portion of the cable.

6. The rotation sensor as claimed in claim 1, wherein the molding is carried out with the use of a mold assembly made up of an upper mold and a lower molds, and the molding segment is formed by means of a compression molding that is performed by inserting the sensor unit and a molding material prepared from a rubber material, in between the upper and lower molds and applying a pressure between the upper and lower molds while the upper and lower molds are heated.

7. The rotation sensor as claimed in claim 1, wherein the molding is carried out by means of an injection molding with the use of a mold assembly and the molding segment is formed by means of the injection molding performed by inserting the sensor unit into the mold assembly and injecting a thermoplastic elastomer into the mold assembly.

8. The rotation sensor as claimed in claim 1, wherein the molding is carried out by means of an injection molding with the use of a mold assembly and the molding segment is formed by means of the injection molding performed by inserting the sensor unit into the mold assembly and injecting a rubber material into the mold assembly.

9. The rotation sensor as claimed in claim 1, wherein the molding is carried out with the use of a mold assembly made up of an upper mold and a lower mold, and the molding segment is formed by inserting a rubber material into one of the upper and lower molds and then injecting the rubber material from the other of the molds.

10. The rotation sensor as claimed in claim 1, wherein the sensor element is a Hall element, a magnetoresistive effect element, a giant magnetoresistive effect element, a tunnel magnetoresistive element or a coil.

11. The rotation sensor as claimed in claim 1, wherein the sensor fixing member is fitted to a stationary ring of the wheel support bearing assembly, or a member fixed to a periphery of the stationary ring.

12. The rotation sensor as claimed in claim 1, wherein the sensor fixing member concurrently serves as a covering member for covering one end face of a wheel support bearing assembly.
